# EUROPÄISCHE PATENTSCHRIFT

(11) **EP 3 170 245 B1**
(45) Veröffentlichungstag und Bekanntmachung des Hinweises auf die Patenterteilung: **10.03.2021**
(21) Anmeldenummer: 15744503.2
(22) Anmeldetag: 10.07.2015
(51) Int. Cl.: H02K 3/52

(54) **STATOR EINES ELEKTROMOTORS**
STATOR OF AN ELECTRIC MOTOR
STATOR D'UN MOTEUR ÉLECTRIQUE

(30) Priorität: 17.07.2014 DE 202014005789 U
(43) Veröffentlichungstag der Anmeldung: 24.05.2017
(73) Patentinhaber: Brose Fahrzeugteile SE & Co. Kommanditgesellschaft, Coburg, 96450 Coburg (DE)
(72) Erfinder: GORNOTT, André, 15806 Zossen (DE); JORDAN, Ivonne, 17268 Milmersdorf (DE); MISCH, Roman, 12555 Berlin (DE); NOACK, Ulrich, 10405 Berlin (DE)
(74) Vertreter: FDST Patentanwälte
(86) Internationale Anmeldenummer: PCT/EP2015/065901
(87) Internationale Veröffentlichungsnummer: WO 2016/008827

(56) Entgegenhaltungen:
- EP-A1- 1 705 775
- EP-A1- 1 727 261
- WO-A2-2004/107531
- DE-A1-102007 058 243
- US-A1- 2004 183 388

## Beschreibung

Die Erfindung betrifft einen Stator eines Elektromotors gemäß dem Oberbegriff des Anspruchs 1 mit einer Anzahl von Statorzähnen, die Spulen einer mehrphasigen Statorwicklung tragen, und mit einer Anzahl von Drahtführungen mit darin eingesetzten ersten Kontaktelementen mit jeweils mindestens einem eine Schneid-Klemm-Öffnung aufweisenden Schneid-Klemm-Kontakt für einen Drahtabschnitt der miteinander verbundener Spulen. Ein solcher Stator eines als Außenläufermotor ausgeführten Elektromotors ist aus der EP 1 727 261 A1 bekannt.

Ein derartiger Elektromotor, insbesondere für ein Elektrofahrrad (E-Bike), weist einen Stator mit einer Anzahl von beispielsweise sternförmig angeordneten Statorzähnen auf, welche eine elektrische Statorwicklung in Form einzelner Statorspulen tragen, die ihrerseits aus einem Isolierdraht gewickelt sind. Die Spulen sind mit deren Spulenenden einzelnen Strängen zugeordnet und untereinander in einer vorbestimmten Weise über gemeinsame Verbindungsleiter verschaltet.

Im Falle eines bürstenlosen Elektromotors als dreiphasige Drehstrommaschine weist der Stator drei Stränge und damit zumindest drei Verbindungsleiter auf, die jeweils phasenversetzt mit elektrischem Strom beaufschlagt werden, um ein magnetisches Drehfeld zu erzeugen, in dem ein üblicherweise mit Permanentmagneten versehener Rotor oder Läufer rotiert. Die Verbindungsleiter werden zur Ansteuerung des Elektromotors an eine Motorelektronik geführt und dort beispielsweise mit einer Leiterplatte kontaktiert. Die Spulen der Statorwicklung werden mittels der Verbindungsleiter in bestimmter Weise miteinander verschaltet. Die Art der Verschaltung ist durch das Wickelschema der Statorwicklung bestimmt, wobei als Wickelschema eine Sternschaltung oder eine Dreiecksschaltung der Spulen üblich ist Aus der DE102007058243 ist ein Anschlusselement zur elektrischen Verbindung eines Magnetventils mit einer Leiterplatte bekannt.

Aus der EP 1 028 513 B1 ist ein zum Betrieb einer Pumpe vorgesehener Elektromotor mit einem Statorpaket bekannt, das von Statorwicklungen umgebene Polschenkel aufweist, die in einem gemeinsamen Isolierkörper gehalten sind. Im angegebenen Beispiel sind je zwei gegenüberliegende Wicklungen von insgesamt sechs Wicklungen zu einem Wicklungspaar zusammengefasst, wobei zunächst eine der Wicklungen angefertigt wird, bevor ein Flyerkopf unter Mitnahme eines Drahtendes über die Stirnseite des Isolierkörpers zur gegenüberliegenden Halterung wechselt und dort die zweite Wicklung aufbringt. Die beiden Wicklungen des jeweiligen Paares sind durch einen verbindenden Drahtabschnitt gekoppelt, der auf der Stirnseite des Isolierkörpers in Führungen oder um Zapfen geführt ist. Die Drahtenden werden in Aufnahmen eingebracht, die auf der Stirnseite des Isolierkörpers angeordnet sind und in denen Schneid-Klemm-Kontakte eingesetzt sind, die zur Fixierung der Drahtenden und zur Kontaktierung nach außen dienen.

Der Erfindung liegt die Aufgabe zugrunde, einen hinsichtlich der Kontaktierung der Spulen der Statorwicklung mit einer Motorelektronik einfach montierbaren Stator eines Elektromotors anzugeben. Insbesondere soll eine Schweißanlage zur Kontaktierung der Statorwicklung eingespart und die Fertigungszeit reduziert werden. Zudem soll eine möglichst raumsparende Kontaktierung realisiert und die axiale Bauhöhe des Stators reduziert, zumindest jedoch beibehalten werden.

Die genannte Aufgabe wird mit den Merkmalen des Anspruches 1 gelöst. Vorteilhafte Ausgestaltungen und Weiterbildungen sind Gegenstand der Unteransprüche.

Hierzu umfasst der Stator eine Anzahl von Statorzähnen, die Spulen einer mehrphasigen Statorwicklung tragen, wobei die Spulen geeigneterweise unter Bildung von Phasensträngen phasenselektiv miteinander verbunden sind. Des Weiteren sind eine Anzahl von polschuhseitigen Drahtführungen mit darin eingesetzten Kontaktelementen vorgesehen, von denen jedes mindestens einen Schneid-Klemm-Kontakt für einen Drahtabschnitt miteinander verbundener Spulen aufweist. Dieses Kontaktelement weist zudem einen Klemmschlitz mit einer Klemmschlitzöffnung auf, über welche in den Klemmschlitz ein mit einer Leiterplatte kontaktiertes oder kontaktierbares zweites Kontaktelement klemmkontaktierend eingesteckt oder im Zuge der Montage einsteckbar ist.

Das zweite Kontaktelement weist einen ersten Kontaktschenkel, beispielsweise in Form eines Messerkontaktes oder mit einem Messerkontakt auf, der in den Klemmschlitz des ersten Kontaktelementes eingreift. Ein an den ersten Kontaktschenkel angeformter Federschenkel ist mit einem Steckschenkel geeigneterweise einteilig verbunden. Dieser Steckschenkel korrespondiert mit einer Stecköffnung der Leiterplatte und ist zweckmäßigerweise zur dem Stator abgewandten Plattenseite der Leiterplatte durchgeführt. Der Steckschenkel des zweiten Kontaktelementes kann zusätzlich oder alternativ auch an die dem Stator zugewandte Plattenseite der Leiterplatte geführt und dort kontaktiert sein.

Im Zuge der Montage kann somit die Leiterplatte mit den bereits montierten und kontaktieren zweiten Kontaktelementen gegen den Stator geführt und mit den korrespondierenden ersten Kontaktelementen klemmkontaktiert werden. Dies ermöglicht eine besonders einfache, sichere und raumsparende Montage des Stators mit der Leiterplatte. Hierbei ist im Bereich der zweiten Kontaktelemente in die statorseitigen Drahtführungen eine axial einseitig, d.h. zur Leiterplatte hin offene Aufnahmekammer gebildet, in welcher das jeweils zweite Kontaktelement im Montagezustand einliegt. Dies wiederum trägt vorteilhaft zur Reduzierung des Bauraums bzw. der axialen Höhe des mit der Leiterplatte gefügten und kontaktierten Stators des Elektromotors bei.

Geeigneterweise ist die Klemmschlitzöffnung des Klemmschlitzes für das zweite Kontaktelement der Schneid-Klemm-Öffnung des mindestens einen Schneid-Klemm-Kontaktes abgewandt. Diese Schneid-Klemm-Öffnung ihrerseits ist zweckmäßigerweise dem jeweiligen Drahtabschnitt zugewandt. Mit anderen Worten befinden sich die Klemmschlitzöffnung des Klemmschlitzes für das zweite Kontaktelement und die Schneid-Klemm-Öffnung des Schneid-Klemm-Kontaktes auf in Axialrichtung gegenüberliegenden Seiten des (ersten) Kontaktelementes.

Der Bezug der Axialrichtung ist hierbei die Motorachse des Elektromotors, d.h. die Drehachse dessen Motorwelle.

Gemäß einer vorteilhaften Ausgestaltung weist das erste Kontaktelement zwei Schneid-Klemm-Kontakte auf. Diese sind geeigneterweise zueinander beabstandet und zweckmäßigerweise auf derselben Seite des ersten Kontaktelementes vorgesehen. Der dann auf der gegenüberliegenden Seite des ersten Kontaktelementes vorgesehene bzw. von dort zugängliche Klemmschlitz für das zweite Kontaktelement befindet sich geeigneterweise zwischen den beiden Schneid-Klemm-Kontakten, jedoch auf der in Axialrichtung gegenüberliegenden Seite des ersten Kontaktelementes.

Eine besonders geeignete Ausgestaltung der jeweiligen Drahtführung sieht zwei zueinander beabstandete und axial einseitig offene Führungskonturen vor, die im Wesentlichen radial orientiert sind. Dies bedeutet, dass die geeigneterweise als Schlitze ausgeführten Führungskonturen sich vom Rotor zum Stator hin erstrecken, der den Rotor geeigneterweise koaxial umgibt (Innenläufermotor). Die in Umfangsrichtung (azimutal) benachbarten Führungskonturen bilden einen axialen Steg oder Dom, um welchen der jeweilige Drahtabschnitt im Zuge des Wickelvorgangs gelegt ist. Der entsprechende Drahtabschnitt ist somit lokal definiert positioniert. Dies ermöglicht in besonders vorteilhafter Weise eine Kontaktierung des Drahtabschnitts mit dem (ersten) Kontaktelement.

Zur Positionierung des (ersten) Kontaktelementes mit dessen geeigneterweise zwei Schneid-Klemm-Kontakten weist die jeweilige Drahtführung zweckmäßigerweise einen tangential verlaufenden und wiederum axial einseitig offenen Steckschlitz auf. In diesen wird das (erste) Kontaktelement im Zuge der Montage eingesteckt und sitzt somit im Montagezustand hierin ein. Dabei erfolgt im Zuge des Einsetzens des (ersten) Kontaktelements die Schneid-Klemm-Kontaktierung mit dem Drahtabschnitt, indem dessen Isolierung rein mechanisch und ohne Wärmeeintrag durchtrennt wird und die Klemmkontaktierung erfolgt.

Wesentlich hierbei ist, dass die jeweilige Schneid-Klemm-Öffnung dem zuvor bereits positionierten Drahtabschnitt zugewandt, d.h. in axialer Steckrichtung frontseitig oder vorne vorgesehen ist. In Verbindung mit den Führungskonturen für den Drahtabschnitt kann somit die axiale Bauhöhe des Stators entsprechend gering gehalten werden, indem insbesondere die Schlitztiefe des Steckschlitzes größer oder gleich der axialen Höhe des (ersten) Kontaktelementes ist.

Das erste Kontaktelement ragt dann geeigneterweise nicht über ein Verschaltungselement hinaus. Dieses ist geeigneterweise zwischen dem Polschuh des Stators und der Motorwelle stirnseitig oberhalb des Rotors angeordnet und vorzugsweise als Verschaltungsring oder gelochte Verschaltungsscheibe (stirnseitige Endscheibe) ausgeführt. Die Drahtführungen sind zweckmäßigerweise entlang eines Kreisbogens dieses Verschaltungselementes nebeneinander angeordnet.

Bezüglich des Kontaktsystems für einen solchen Stator mit einer Anzahl von Statorzähnen, die phasenselektiv miteinander verbundene Spulen einer mehrphasigen Statorwicklung tragen, sind geeigneterweise ein dem Stator zugeordnetes erstes Kontaktelement und ein mit diesem steck- und klemmkontaktiertes zweites Kontaktelement vorgesehen, das in einen Klemmschlitz des ersten Kontaktelements eingesteckt oder im Zuge der Montage einsteckbar ist. Das erste Kontaktelement weist hierbei mindestens einen, vorzugsweise zwei, Schneid-Klemm-Kontakt(e) auf, der/die mit einem Drahtabschnitt einer Spule oder zweier benachbarter Spulen klemmkontaktiert oder im Zuge der Montage kontaktierbar ist/sind.

Nachfolgend wird ein Ausführungsbeispiel der Erfindung anhand einer Zeichnung näher erläutert. Darin zeigen:
- Fig. 1: in perspektivischer Darstellung einen mit einer Leiterplatte gefügten und kontaktierten bewickelten Stator und einen von diesem konzentrisch umgebenden Rotor eines Elektromotors,
- Fig. 2: den mit der Leiterplatte gefügten und kontaktierten Stator in Seitenansicht,
- Fig. 3: in perspektivischer Ansicht den Stator bei entnommener Leiterplatte mit Blick auf ein dreiphasiges Kontaktsystem,
- Fig. 4: ausschnittsweise den Stator mit polschuhseitigem Blick auf eines der Kontaktsysteme in dessen Schneid-Klemm-Kontaktierung mit einem Drahtabschnitt benachbarter Spulen der Statorwicklung,
- Fig. 5: in perspektivischer Darstellung das Kontaktsystem mit einem ersten Kontaktelement und einem mit diesem klemmkontaktierten zweiten Kontaktelement zur Leiterplattenkontaktierung,
- Fig. 6: das erste Kontaktelement in einer Frontansicht,
- Fig. 7: das zweite Kontaktelement in einer ersten perspektivischen Ansicht, und
- Fig. 8: das zweite Kontaktelement in einer zweiten perspektivischen Ansicht.

Einander entsprechende Teile sind in allen Figuren mit den gleichen Bezugszeichen versehen.

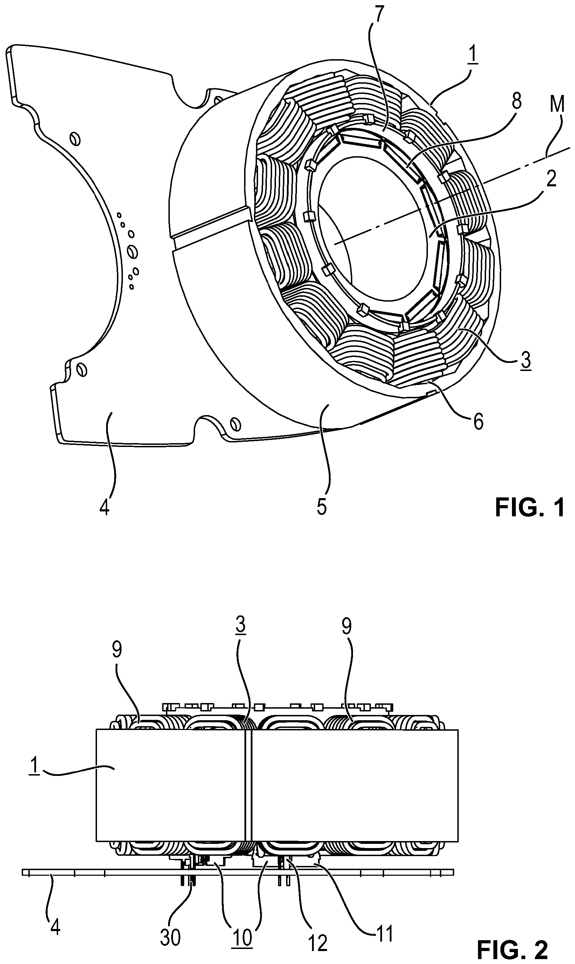

Die Figuren 1 und 2 zeigen den Stator 1 und einen von diesem unter Bildung eines Luftspaltes umgebenen Rotor 2 sowie eine mit dem Stator 1 gefügte und mit dessen Statorwicklung 3 kontaktierte Leiterplatte 4 einer Elektronik zur Steuerung eines Elektromotors, insbesondere eines Elektrofahrrad. Der Stator 1 und der Rotor 2 sind geeigneterweise aus paketierten Einzelblechen aufgebaut. Hierzu sind statorseitig sternförmige Einzelbleche zu einem Statorblechpaket gefügt, das in einen ebenfalls geeigneterweise aus Ringblechen paketiertes Statorjoch 5 eingepresst ist.

Das sternförmige Blechpaket des Stators 1 bildet im Ausführungsbeispiel zwölf Statorzähne 6, die sich vom dem Rotor 2 zugewandten Polschuh 7 zum Statorjoch 5 hin radial erstrecken. Der Rotor 2 ist mit Permanentmagneten 8 versehen, die in nicht näher bezeichnete Aufnahmetaschen des Rotorblechpaketes eingesteckt sind. Die Kontaktierung der Statorwicklung 3, die eine der Anzahl der Statorzähne 6 entsprechende Anzahl von Spulen 9 umfasst, ist mittels eines Kontaktsystems 10 mit der Leiterplatte 4 kontaktiert.

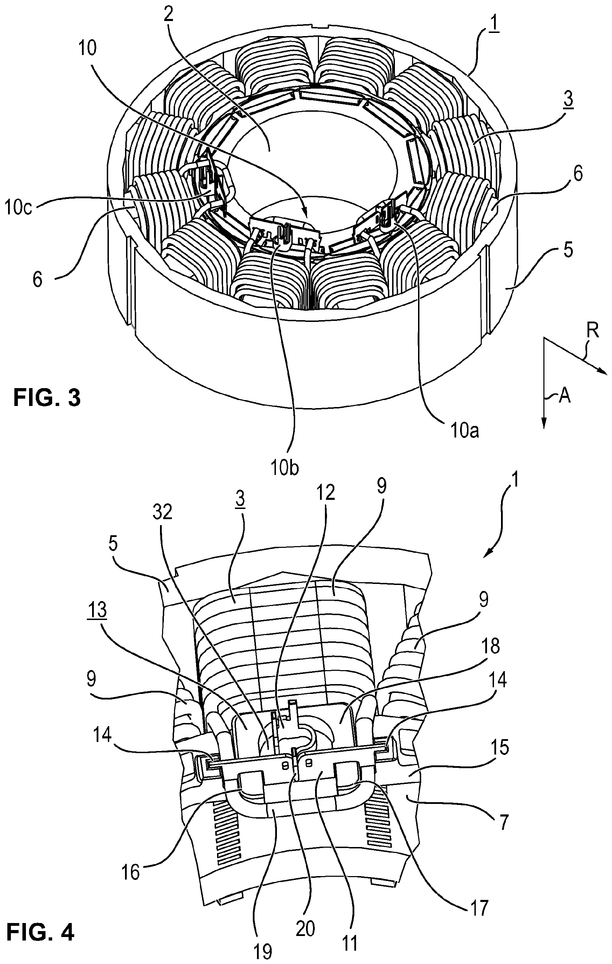

Wie aus den Figuren 3 und 4 vergleichsweise deutlich ersichtlich ist, umfasst das Kontaktsystem 10 im Ausführungsbeispiel drei Kontakteelement-Paare 10a, 10b, 10c für die im Ausführungsbeispiel dreiphasige Statorwicklung 3. Jeder Phase sind hierbei zwei einander diametral gegenüberliegende Spulenpaare mit insgesamt vier Spulen 9 zugeordnet, die innerhalb des jeweiligen Phasenstrangs in Reihe geschaltet sind. Jeder Phase der Statorwicklung 3 ist eines der Kontaktelement-Paare 10a bis 10c zugeordnet.

Jedes der Kontaktelement-Paare 10a, 10b, 10c umfasst gemäß Figur 4 ein erstes Kontaktelement 11 und ein zweites Kontaktelement 12. Das erste Kontaktelement 11 sitzt in einer Drahtführung 13 und dort in einem tangential verlaufenden, axial einseitig offenen Steckschlitz 14 ein. Die jeweilige Drahtführung 13 ist Bestandteil einer nachfolgend als Verschaltungsring 15 bezeichneten Verschaltungs- oder Endscheibe, der bzw. die sich auf der der Leiterplatte 4 zugewandten Stirnseite des Stators 1 oberhalb oder endseitig des Rotors 2 befindet. In Figur 3 ist dieser Verschaltungsring 15 entnommen, sodass der Blick auf den Rotor 2 bzw. dessen Stirnseite freigegeben ist.

Die jeweilige Drahtführung 13 weist zwei zueinander beabstandete und axial einseitig offene sowie im Wesentlichen radial orientierte Führungskonturen 16, 17 auf. Diese werden vom tangential verlaufenden Steckschlitz 14 praktisch gekreuzt. Unter axial und radial ist "in Axialrichtung verlaufend oder orientiert" bzw. in Radialrichtung verlaufend oder orientiert" zu verstehen. Die auf die in Figur 1 eingezeichnete Motorachse M bezogenen Axialrichtung A und Radialrichtung R sind in Figur 3 veranschaulicht.

Die beiden im Ausführungsbeispiel schlitzartigen Führungskonturen 16, 17 bilden einen axialen Schaft oder Dom 18, um welchen ein Drahtabschnitt 19 zweier benachbarter Spulen 9 der Spulenwicklung 3 gelegt ist. Im Ausführungsbeispiel handelt sich hierbei um den Drahtabschnitt 19 zwischen benachbarten Spulen 9 zweier Phasenstränge, deren Spulen 9 im Ausführungsbeispiel in Dreieckschaltung verschaltet sind.

Der Drahtabschnitt 19 liegt in den schlitzartigen Führungskonturen 16, 17 der Drahtführung 13 ein. In dieser Position wird im Zuge der Montage das erste Kontaktelement 11 in den Steckschlitz 14 eingesteckt, wobei im Zuge dessen eine Schneid-Klemm-Kontaktierung des ersten Kontaktelementes 11 mit dem Drahtabschnitt 19, vorzugsweise innerhalb beider Führungskonturen 16 und 17, erfolgt. Das erste Kontaktelement 11 weist den beiden Schneid-Klemm-Kontaktstellen einen nachfolgend näher bezeichneten Klemmschlitz zur Aufnahme eines Kontaktschenkels 20 des zweiten Kontaktelementes 12 auf. Im Montagezustand (Figur 2) ist das zweite Kontaktelement 12 mit der Leiterplatte 4 gefügt und kontaktiert.

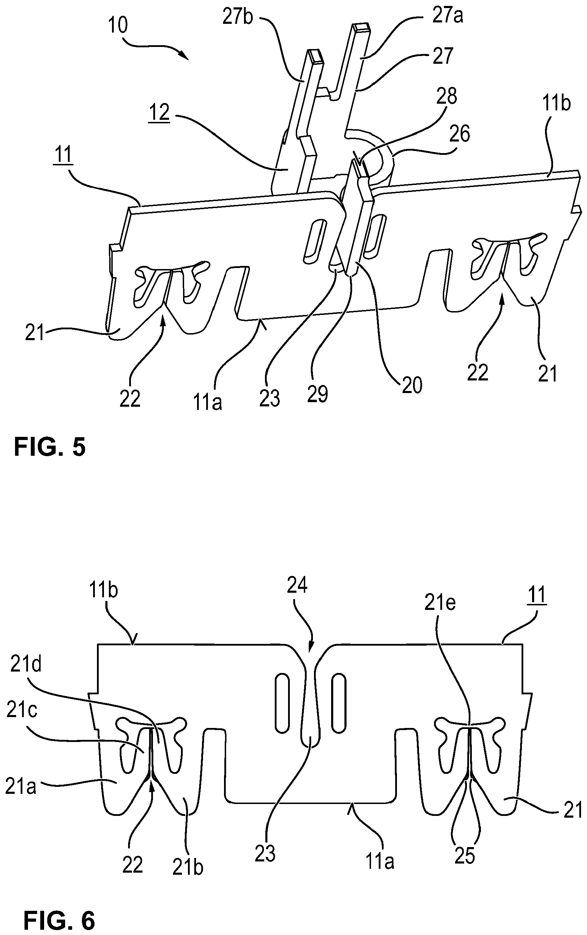

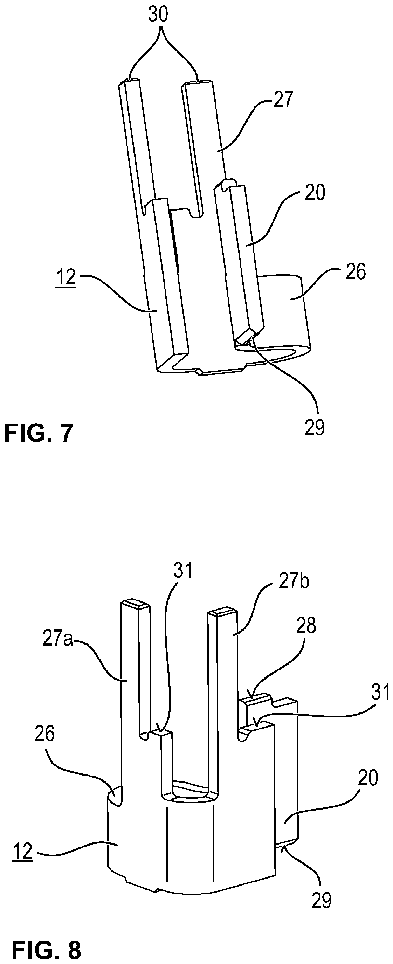

Figur 5 zeigt ein solches Kontaktelement-Paar 11, 12 des Kontaktsystems 10. Figur 6 zeigt das erste Kontaktelement 11, während die Figuren 7 und 8 in unterschiedlichen perspektivischen Darstellungen das zweite Kontaktelement 12 zeigen.

Das erste Kontaktelement 11 weist im Ausführungsbeispiel zwei zueinander beabstandete Schneid-Klemm-Kontakte 21 mit jeweils einer Schneid-Klemm-Öffnung 22 auf. Diese befinden sich auf der im Montagezustand dem Drahtabschnitt 19 zugewandten Unterseite 11a, mit welcher das erste Kontaktelement 11 in dem Steckschlitz 14 der Drahtführung 13 einsitzt. Der zur Aufnahme des Kontaktschenkels 20 des zweiten Kontaktelementes 12 dienende Klemmschlitz 23 des ersten Kontaktelementes 11 weist ebenfalls eine Klemmschlitzöffnung 24 (Figur 6) auf, die sich auf der gegenüberliegenden Oberseite 11b des ersten Kontaktelementes 11 befindet.

Der jeweilige Schneid-Klemm-Kontakt 21 ist im Wesentlichen M-förmig mit zwei V-förmigen Schneid-Klemm-Schenkeln 21a, 21b ausgebildet. Die Schenkelabschnitte 21c und 21d der V-förmigen Schneid-Klemm-Öffnung 22 sind nicht miteinander verbunden. Vielmehr liegen dieser im Ausführungsbeispiel im Bereich des Schlitzgrundes 21e aneinander an. Dadurch sind die Schneid-Klemm-Schenkel 21a, 21b und somit der jeweilige Schneid-Klemm-Kontakte 21 im Schneid-Klemm-Schlitzbereich federelastisch und können im Zuge der Schneid-Klemm-Kontaktierung entsprechend unter Federvorspannung ausweichen. Im Schlitzbereich sind an den jeweiligen Schneid-Klemm-Schenkel 21a und 21b messerartige Schneiden 25 zur Durchtrennung der Drahtisolierung des Drahtabschnittes 19 gebildet. Das zweite Kontaktelement 12 weist den mit dem Klemmschlitz 23 des ersten Kontaktelementes 11 korrespondierenden und in diesen Klemmschlitz 23 eingreifenden Kontaktschenkel 20 und einen sich hieran anschließenden Federschenkel 26 sowie einen sich hieran wiederum anschließenden Steckschenkel 27 auf. Dieser umfasst im Ausführungsbeispiel zwei in Axialrichtung A orientierte Steckstifte 27a und 27b. Im Montagezustand sitzen diese Steckstifte 27a, 27b und somit der Steckschenkel 27 des zweiten Kontaktelementes 12 in korrespondierenden Durchgangsöffnungen der Leiterplatte 4 ein und sind dort auf der einen und/oder anderen Leiterplattenseite kontaktiert.

Der im Ausführungsbeispiel halbkreisförmig ausgebildete Federschenkel 26 des zweiten Kontaktelementes 12 bildet einen federnden Bereich aus, der die Stecckontaktierung zwischen dem ersten und zweiten Kontaktelement 11, 12 erleichtert und eventuelle Fertigungstoleranzen ausgleicht. Zudem ist hierdurch im elektromotorischen Betrieb ein Ausgleich betriebsbedingter mechanischer Schwingungen und Relativbewegungen zwischen dem Stator 1 und der Leiterplatte 4 ohne Beeinträchtigung der Kontaktierung zwischen den Kontaktelementen 11, 12 ermöglicht.

Die Abstützung des zweiten Kontaktelementes 12 an der Leiterplatte 4 erfolgt über eine bewusste erhaben ausgeführte Abstützfläche 28, die geeigneterweise am Kontaktschenkel 20 auf dessen einer Schenkelspitze 29 abgewandten Seite gebildet ist. Der Kontaktschenkel 20 mit dessen im Klemmschlitz 23 des ersten Kontaktelementes 11 einsitzender Schenkelspitze 29 ist geeigneterweise als Messerkontakt ausgebildet.

In Figur 7 sind mit 30 Anschlüsse des zweiten Kontaktelementes am stirnseitigen Ende dessen Steckschenkels 27 bezeichnet, welche Anschlüsse 30 durch die Leiterplatte 4 hindurchgeführt sind (Figur 2).

Wie aus Figur 8 vergleichsweise deutlich ersichtlich ist, sind zusätzlich zur Abstützfläche 28 zwei weitere Anlageflächen 31 am Steckschenkel (Steckschaft) 27 des zweiten Kontaktelementes 12 gebildet, mit denen dieses an der Leiterplatte 4 anliegt.

Die Erfindung ist nicht auf das vorstehend beschriebene Ausführungsbeispiel beschränkt. Vielmehr können auch andere Variante der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf anderer Weise miteinander kombinierbar, ohne den Gegenstand der Erfindung zu verlassen.

So sind im Ausführungsbespiel die Spulen 9 der Statorwicklung 3 mit den jeweils zwei Spulenpaaren in drei Phasensträngen zur Bildung eines Drehstromsystems in Dreiecksschaltung verschaltet. Dabei verbindet der jeweilige Drahtabschnitt 19 den Übergang zwischen einer der Spulen 9 eines Phasenstrangs mit einer der Spulen 9 des hiermit in Reihe geschalteten weiteren Phasenstranges. Im Bereich dieses Drahtabschnittes 19 erfolgt die Kontaktierung mittels des ersten Kontaktelementes 11 und des jeweiligen Phasenanschlusses der Statorwicklung 3 einerseits und über das entsprechende zweite Kontaktelement 12 mit der Leiterplatte 4 andererseits.

Das Kontaktsystem 10 eignet sich jedoch grundsätzlich auch zur Realisierung einer Sternschaltung, wobei dann die Drahtabschnitte 19 die Spulen- oder Wicklungsenden eines der drei im Sternpunkt verbundenen Phasenstränge mit wiederum einer Anzahl von in Reihe geschalteten Spulen 9 bildet. Ein Sternpunktelement kann beispielsweise drei Schneidklemmen mit oder ohne Federkontakt für die Elektronik- bzw. Leiterplattenkontaktierung aufweisen.

Zudem kann das jeweils erste, statorseitige Kontaktelement 11 mit einem messerartigen Kontaktschenkel versehen sein, während dann das zweiten, leiterplattenseitige Kontaktelement 12 den korrespondierende Klemmschlitz aufweist.

Zur möglichst weitgehenden Bauraumreduzierung und insbesondere zur Reduzierung der axialen Statorhöhe ist in die jeweilige Drahtführung 13 eine axiale einseitig offene Aufnahmekammer 32 (Fig. 4) eingebracht. In diese ragt oder greift das zweite Klemmelement 12 im in Fig. 2 gezeigten Montage- oder Fügezustand des Stators 1 mit der Leiterplatte 4 der Motorelektronik teilweise ein.

### Bezugszeichenliste

- 1: Stator
- 2: Rotor
- 3: Statorwicklung
- 4: Leiterplatte
- 5: Statorjoch
- 6: Statorzahn
- 7: Polschuh
- 8: Permanentmagnet
- 9: Spule
- 10: Kontaktsystem
- 10a: Kontaktelement-Paar
- 10b: Kontaktelement-Paar
- 10c: Kontaktelement-Paar
- 11: erstes Kontaktelement
- 12: zweites Kontaktelement
- 13: Durchführung
- 14: Steckschlitz
- 15: Verschaltungsring/Endscheibe
- 16: Führungskontur
- 17: Führungskontur
- 18: axialer Schaft/Dom
- 19: Drahtabschnitt
- 20: Kontaktschenkel
- 21: Schneid-Klemm-Kontakt
- 21a: Schneid-Klemm-Schenkel
- 21b: Schneid-Klemm-Schenkel
- 21c: Schenkelabschnitt
- 21d: Schenkelabschnitt
- 21e: Schlitzgrund
- 22: Schneid-Klemm-Öffnung
- 23: Klemmschlitz
- 24: Klemmschlitzöffnung
- 25: Schneide
- 26: Federschenkel
- 27: Steckschenkel
- 27a: Steckstift
- 27b: Steckstift
- 28: Abstützfläche
- 29: Schenkelspitze
- 30: Anschluss
- 31: Anlagefläche
- 32: Aufnahmekammer

- A: Axialrichtung
- R: Radialrichtung

## Patentansprüche

1. Stator (1) eines Elektromotors, mit einer Anzahl von Statorzähnen (6), die Spulen (9) einer mehrphasigen Statorwicklung (3) tragen, und mit einer Anzahl von polschuhseitigen Drahtführungen (13) mit darin eingesetzten ersten Kontaktelementen (11) mit jeweils mindestens einem eine Schneid-Klemm-Öffnung (22) aufweisenden Schneid-Klemm-Kontakt (21) für einen Drahtabschnitt (19) miteinander verbundener Spulen (9),
- wobei das erste Kontaktelement (11) einen Klemmschlitz (23) mit einer Klemmschlitzöffnung (24) aufweist, über welche in den Klemmschlitz (23) ein mit einer Leiterplatte (4) kontaktiertes zweites Kontaktelement (12) klemmkontaktierend eingesteckt oder einsteckbar ist, und
- wobei das zweite Kontaktelement (12) einen in den Klemmschlitz (23) des ersten Kontaktelement (11) eingreifenden Kontaktschenkel (20) aufweist,
**dadurch gekennzeichnet,**
- **dass** das zweite Kontaktelement (12) einen mit dessen Kontaktschenkel (20) über einen Federschenkel (26) verbundenen Steckschenkel (27) aufweist, der in eine Stecköffnung und/oder an eine Kontaktstelle der Leiterplatte (4) geführt oder führbar ist, und
- **dass** die jeweilige Drahtführung (13) eine axial einseitig offene Aufnahmekammer (32) aufweist, in welcher das zweite Kontaktelement (12) im klemmkontaktierenden Montagezustand teilweise einliegt.

2. Stator (1) nach Anspruch 1,
**dadurch gekennzeichnet,**
**dass** die Klemmschlitzöffnung (24) des Klemmschlitzes (23) der Schneid-Klemm-Öffnung (22) abgewandt und diese dem jeweiligen Drahtabschnitt (19) zugewandt ist.

3. Stator (1) nach Anspruch 1 oder 2,
**dadurch gekennzeichnet,**
**dass** das erste Kontaktelement (11) einen zum Schneid-Klemm-Kontakt (21) beabstandeten zweiten Schneid-Klemm-Kontakt (21) aufweist.

4. Stator (1) nach einem der Ansprüche 1 bis 3,
**dadurch gekennzeichnet,**
**dass** die jeweilige Drahtführung (13) mindestens eine axial einseitig offene und im Wesentlichen radial orientierte Führungskontur (16, 17) aufweist, in welchem der Drahtabschnitt (19) zumindest teilweise einliegt.

5. Stator (1) nach einem der Ansprüche 1 bis 4,
**dadurch gekennzeichnet,**
**dass** die jeweilige Drahtführung (13) zwei zueinander beabstandete und axial einseitig offene sowie im Wesentlichen radial orientierte Führungskonturen (16, 17) aufweist, die einen axialen Steg (18) bilden, um welchen der Drahtabschnitt (19) gelegt ist.

6. Stator (1) nach einem der Ansprüche 1 bis 5,
**dadurch gekennzeichnet,**
**dass** die jeweilige Drahtführung (13) einen tangential verlaufenden und axial einseitig offenen Steckschlitz (14) aufweist, in welchem das erste Kontaktelement (11) mit dessen Schneid-Klemm-Öffnung (22) einsitzt.

7. Stator (1) nach Anspruch 6,
**dadurch gekennzeichnet,**
**dass** die Schlitztiefe des Steckschlitzes (14) größer oder gleich der axialen Höhe des ersten Kontaktelements (11) ist.

8. Stator (1) nach einem der Ansprüche 1 bis 7,
**dadurch gekennzeichnet,**
**dass** die Drahtführungen (13) entlang eines Kreisbogens eines polschuhseitigen, scheiben- oder ringförmigen Verschaltungselementes (15) angeordnet sind.

9. Stator (1) nach einem der Ansprüche 1 bis 8,
**dadurch gekennzeichnet,**
**dass** der Federschenkel (26) des zweiten Kontaktelementes (12) halbkreisförmig ist.

10. Stator (1) nach einem der Ansprüche 1 bis 9,
**dadurch gekennzeichnet,**
**dass** am stirnseitigen Ende des Steckschenkels (27) des zweiten Kontaktelements (12) durch die Leiterplatte (4) hindurch geführte Anschlüsse (30) vorgesehen sind.

11. Stator (1) nach einem der vorhergehenden Ansprüche, mit einer der Phasenzahl entsprechenden Anzahl oder davon einem Vielfachen an polschuhseitigen Drahtführungen (13) mit darin eingesetzten ersten Kontaktelementen (11) sowie hiermit klemmkontaktierten oder klemmkontaktierbaren zweiten Klemmelementen (12).

## Claims

1. Stator (1) of an electric motor, with a number of stator teeth (6), which carry coils (9) of a polyphase stator winding (3), and with a number of pole shoe-side wire guides (13) with first contact elements (11), which are inserted therein and each have at least one cutting-clamping contact (21), which has an insulation displacement opening (22), for a wire section (19) of coils (9), which are connected to one another,
- the first contact element (11) having a clamping slot (23) with a clamping slot opening (24), via which a second contact element (12), which is contacted with a printed circuit board (4), is inserted or can be inserted into the clamping slot (23) in a clamping-contacting manner, and
- the second contact element (12) having a contact limb (20) engaging in the clamping slot (23) of the first contact element (11),
**characterized in**
- **that** the second contact element (12) has an insertion leg (27), which is connected to its contact leg (20) via a spring leg (26) and is guided or can be guided into a insertion opening and/or to a contact point of the printed circuit board (4), and
- **that** the respective wire guide (13) has a receiving chamber (32), which is axially open on one side and in which the second contact element (12) is partially inserted in the clamp-contacting assembly state.

2. Stator (1) according to claim 1,
**characterized in**
**that** the clamping slot opening (24) of the clamping slot (23) faces away from the cutting-clamping opening (22) and the latter faces the respective wire section (19).

3. Stator (1) according to claim 1 or 2,
**characterized in**
**that** the first contact element (11) has a second cutting-clamping contact (21) spaced apart from the cutting-clamping contact (21).

4. Stator (1) according to one of claims 1 to 3,
**characterized in**
**that** the respective wire guide (13) has at least one guide contour (16, 17), which is axially open on one side and is oriented essentially radially and in which the wire section (19) is at least partially inserted.

5. Stator (1) according to one of claims 1 to 4,
**characterized in**
**that** the respective wire guide (13) has two guide contours (16, 17) spaced apart from one another, which are axially open on one side and are oriented essentially radially, and form an axial web (18) around which the wire section (19) is laid.

6. Stator (1) according to one of the claims 1 to 5,
**characterized in**
**that** the respective wire guide (13) has a tangentially extending insertion slot (14), which is axially open on one side and in which the first contact element (11) is seated with its cutting-clamping opening (22).

7. Stator (1) according to claim 6,
**characterized in**
**that** the slot depth of the insertion slot (14) is greater than or equal to the axial height of the first contact element (11).

8. Stator (1) according to one of claims 1 to 7,
**characterized in**
**that** the wire guides (13) are arranged along an arc of a pole shoe-side, discshaped or ring-shaped interconnection element (15).

9. Stator (1) according to one of claims 1 to 8,
**characterized in**
**that** the spring leg (26) of the second contact element (12) is semicircular.

10. Stator (1) according to one of claims 1 to 9,
**characterized in**
**that** terminals (30) guided through the printed circuit board (4) are provided at the end face of the insertion leg (27) of the second contact element (12).

11. Stator (1) according to one of the preceding claims, with a number, corresponding to the number of phases, or a multiple thereof of pole shoe-side wire guides (13) with first contact elements (11) inserted therein and second terminal elements (12) contacted or contactable in a clamping-contacting manner therewith.

## Revendications

1. Stator (1) d'un moteur électrique, avec un certain nombre de dents de stator (6) portant des bobines (9) d'un enroulement statorique polyphasé (3), et avec un certain nombre de guide-fils (13) du côté pièce pôles avec des premiers éléments de contact (11), qui y sont insérés et qui comportent chacun au moins un contact autodénudant (21), qui comporte une ouverture autodénudante (22), pour un tronçon de fil (19) de bobines (9) reliées entre elles
- le premier élément de contact (11) comportant une fente de serrage (23) avec une ouverture de fente de serrage (24), par laquelle un deuxième élément de contact (12) contacté avec une carte de circuit imprimé (4) est inséré ou peut être inséré dans la fente de serrage (23) en établissant un contact par serrage, et
- le deuxième élément de contact (12) comporte une branche de contact (20) s'engageant dans la fente de serrage (23) du premier élément de contact (11),
**caractérisé en ce**
- **que** le deuxième élément de contact (12) comporte une branche d'enfichage (27), qui est reliée à sa branche de contact (20) par une branche à ressort (26) et qui est guidée ou peut être guidée dans une ouverture d'enfichage et/ou à un point de contact de la carte de circuit imprimé (4), et
- **que** le guide-fil (13) respectif comporte une chambre de réception (32) ouverte axialement d'un côté, dans laquelle le deuxième élément de contact (12) est partiellement inséré à l'état de montage avec serrage.

2. Stator (1) selon la revendication 1,
**caractérisé en ce**
**que** l'ouverture de la fente de serrage (24) de la fente de serrage (23) est orientée à l'opposé de l'ouverture de serrage de coupe (22) et cette dernière est orientée vers le tronçon de fil (19) correspondante.

3. Stator (1) selon la revendication 1 ou 2,
**caractérisé en ce**
**que** le premier élément de contact (11) comporte un deuxième contact autodénudant (21) espacé du contact autodénudant (21).

4. Stator (1) selon l'une des revendications 1 à 3,
**caractérisé en ce**
**que** le guide-fil (13) respectif comporte au moins un contour de guidage (16, 17) ouvert axialement sur un côté et orienté essentiellement radialement, dans lequel le tronçon de fil (19) est inséré au moins partiellement.

5. Stator (1) selon l'une des revendications 1 à 4,
**caractérisé en ce**
**que** le guide-fil (13) respectif comporte deux contours de guidage (16, 17) espacés l'un de l'autre, ouverts axialement d'un côté et orientés essentiellement radialement, qui forment une nervure axiale (18) autour de laquelle est placé le tronçon de fil (19).

6. Stator (1) selon l'une des revendications 1 à 5,
**caractérisé en ce**
**que** le guide-fil (13) respectif comporte une fente d'enfichage (14) s'étendant tangentiellement, ouverte axialement sur un côté, dans laquelle le premier élément de contact (11) est logé avec son ouverture de coupe/clampage (22).

7. Stator (1) selon la revendication 6,
**caractérisé en ce**
**que** la profondeur de la fente d'insertion (14) est supérieure ou égale à la hauteur axiale du premier élément de contact (11).

8. Stator (1) selon l'une des revendications 1 à 7,
caractérisé en
que les guide-fils (13) sont disposés le long d'un arc d'un élément d'interconnexion (15) côte pièce pôle en forme de disque ou d'anneau.

9. Stator (1) selon l'une des revendications 1 à 8,
**caractérisé en ce**
**que** la branche à ressort (26) du deuxième élément de contact (12) est semi-circulaire.

10. Stator (1) selon l'une des revendications 1 à 9,
**caractérisé en ce**
**que** des bornes (30) guidées à travers la carte de circuit imprimé (4) sont prévues à l'extrémité avant de la branche d'enfichage (27) du deuxième élément de contact (12).

11. Stator (1) selon l'une des revendications précédentes, avec un nombre de guide-fils (13) côté pièce pôle correspondant au nombre de phases, ou un multiple de celui-ci, avec des premiers éléments de contact (11), qui y sont insérés et des deuxièmes éléments de contact (12), qui sont contactés par serrage ou peuvent être contactés par serrage avec ceux-ci.
